# EUROPÄISCHE PATENTSCHRIFT

(11) **EP 0 981 702 B1**
(45) Veröffentlichungstag und Bekanntmachung des Hinweises auf die Patenterteilung: **11.06.2003**
(21) Anmeldenummer: 98924048.6
(22) Anmeldetag: 30.04.1998
(51) Int. Cl.: F16J 15/32

(54) **BÜRSTENDICHTUNG MIT FRONT- UND STÜTZPLATTE**
BRUSH-HAIR SEAL WITH A FRONT PLATE AND A BEARING PLATE
JOINT-BROSSE AVEC PLAQUE FRONTALE ET PLAQUE D'APPUI

(30) Priorität: 16.05.1997 DE 19720648
(43) Veröffentlichungstag der Anmeldung: 01.03.2000
(73) Patentinhaber: MTU Aero Engines GmbH, 80995 München (DE)
(72) Erfinder: WERNER, Klemens, D-80999 München (DE); GAIL, Alfons, D-86316 Friedberg (DE)
(74) Vertreter: Einsele, Rolf W.
(86) Internationale Anmeldenummer: DE9801197
(87) Internationale Veröffentlichungsnummer: WO98053229

(56) Entgegenhaltungen:
- DE-A- 3 907 614

## Beschreibung

Die Erfindung betrifft eine Bürstendichtung mit Front- und Stützplatte gemäß dem Oberbegriff von Anspruch 1.

Es sind zahlreiche verschiedene Bürstendichtungen bekannt, die bspw. bei Gasturb i-nen eingesetzt werden, um den Zwischenraum zwischen einem Gehäuse und einem mit einer verhältnismäßig hohen Drehzahl rotierenden Rotor gegen Leckage abzudichten. Bei derartigen Dichtungen stehen die Enden der Borsten, die zu einem dic h-ten Borstenpaket zusammengefaßt sind, über die Innenkante der Stützplatte vor und dichten so einen möglichst klein zu haltenden Zwischenraum zwischen der Innenka n-te der Stützplatte und der Rotoroberfläche ab. Liegt ein großer Differenzdruck an der Dichtung an, so stützt die auf der Niedrigdruckseite angeordnete Stützplatte die Borsten gegen eine Durchbiegung zur Niederdruckseite ab.

Zur Herstellung einer im wesentlichen aus einer Frontplatte, einer Stützplatte und einem dazwischen angeordneten Borstenpaket bestehenden Bürstendichtung werden bisher Schweißverfahren eingesetzt, mit denen insbesondere die das (Dichtungs-)Gehäuse bildende Front- und Stützplatte miteinander verschweißt wer-den.

Bei einer aus der EP 0 453 315 bekannten Bürstendichtung werden bspw. die Frontplatte, das Borstenpaket und die Stützplatte mittels einer Schweißnaht verbunden, die sich um den äußeren Umfang der Bürstendichtung erstreckt. Da die äußere U m-fangsfläche eine Paßfläche ist und zur paßgenauen Anordnung der Bürstendichtung in bezug zum Gehäuse und dem Rotor eben und senkrecht zu den beiden äußeren Seitenflächen der Front- und der Stützplatte verlaufen muß, sind aufgrund der Schweißnaht zusätzliche Bearbeitungsschritte, z.B. Schleifen, notwendig. Dieses führt zu höheren Fertigungskosten und längeren Durchlaufzeiten bei der Herstellung.

Beim Einsatz von Schweißverfahren erweist sich zudem als nachteilig, daß sich die verhältnismäßig dünnen Front- und Stützplatten aufgrund ungleichmäßiger Temper a-turverteilungen häufig verziehen.

Die DE 39 07 614 A1 offenbart eine Bürstendichtung mit einem in einem geschlitzten Rohr gehaltenen Drahtbündel, wobei das Rohr von zwei zu einem Gehäuse z u-sammengefügten Stützringen durch eine oder mehrere Kiemmlippen, die an dem einen Stützring angebracht sind und den zweiten Stützring unter Erzeugung der Klemmkraft außenseitig umfassen, zusammengehalten sind. Das Positionieren der Klemmlippen erfolgt durch einen Einroll- bzw. Walzvorgang. Das Herstellen der beiden Stützringe wird ebenso wie das Vorsehen einer Paßfläche am Bürstendichtungsgehäuse nicht beschrieben.

Der Erfindung liegt die Aufgabe zugrunde, eine Bürstendichtung zu schaffen; deren (Dichtungs-)Gehäuse fertigungstechnisch einfach, d.h. mit möglichst wenigen Bea r-beitungsvorgängen herzustellen ist.

Die Lösung der Aufgabe ist erfindungsgemäß durch die kennzeichnenden Merkmale des Anspruchs 1 gekennzeichnet.

Hieraus ergibt sich der Vorteil, daß das (Dichtungs-)Gehäuse ohne Wärmezufuhr he r-gestellt wird und keine Verzüge infolge unterschiedlicher Temperaturverteilungen auftreten. Somit entfällt auch das beim Schweißen stets erfordleriche zusätzliche Bearbeiten der äußeren Umfangs- bzw. Paßfläche. Die Front- und Stützplatte best e-hen aus tiefgezogenen Blechen, die paßgenau hergestellt sind, so daß keine weiteren Arbeitsschritte am Paßsitz erforderlich sind.

Ein freies Ende der Front- oder Stützplatte ist als Bördellippe ausgebildet. Das freie Ende liegt dabei an einem zur Hauptausbreitungsebene der Front- bzw. Stützplatte rechtwinkligen Abschnitt, der jeweils unter Bildung einer Außenkante mit einem A u-ßenradius R nach innen abgewinkelt ist. Die Bördellippe umgreift dabei die Außenkante der jeweils anderen Platte soweit, daß eine starre und sichere kraftschlüssige Verbindung der beiden Platten vorliegt.

Die Bördellippe weist eine gegenüber der Materialstärke S der Front- oder Stützpla t-te verringerte Stärke s auf. Die Stärke s ist ebenso wie die Länge I der Bördellippe in Abhängigkeit von der Materialstärke sowie der Form der Platten, der Bauhöhe der Bürste, der Biegeradien etc. auszuwählen.

Bevorzugt beträgt die Stärke s der Bördellippe etwa 2/3 der Materialstärke S der Front- oder Stützplatte.

Es ist femer vorteilhaft, daß der Bogen kreisförmig und der entsprechende Biegeradius r gleich dem 1,1 bis 1,5 fachen der Materialstärke S der Front- oder Stützplatte ist.

Bevorzugt ist der Biegeradius r gleich dem Außenradius R an der Außenkante der Front- oder Stützplatte.

Die Front- und Stützplatte können aus Stahlblechen bestehen, wobei auch Spezia I-stähle eingesetzt werden können.

Bevorzugt sind die Borsten bzw. das Borstenpaket durch das Kaltverfügen der Frontund Stützplatte kraftschlüssig eingespannt. Dadurch dichten die Borsten nicht nur ab, sondern es wird zudem ein Mitrotieren des Borstenpakets unter extremen Anstreifen des Rotors vermieden. Zur Erhöhung des Reibkoeffizienten kann ein zur Aufnahme der Borsten dienendes C-Rohr oder die Innenfläche der Front- und Stützplatte z.B. aufgerauht, gerändelt oder mit Kerben versehen sein.

Weitere bevorzugte Ausgestaltungen der Erfindung sind in den Unteransprüchen beschrieben.

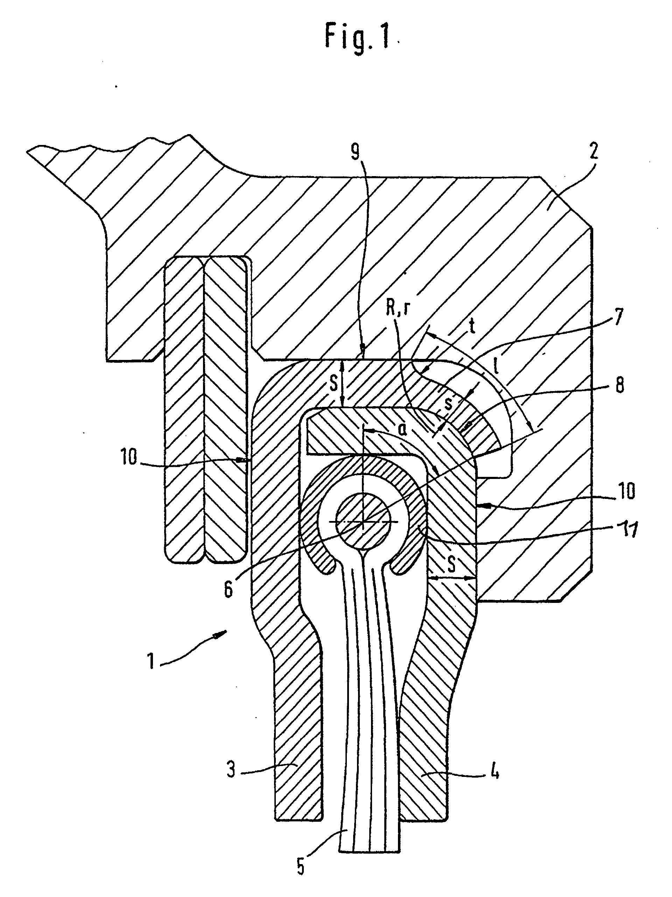

Im folgenden wird die Erfindung unter Bezugnahme auf eine Zeichnung (Fig. 1) näher erläutert, die eine schematische Querschnittsansicht eines Ausführungsbeispiels der erfindungsgemäßen Bürstendichtung zeigt.

Fig. 1 zeigt eine im ganzen mit 1 bezeichnete Bürstendichtung, die in einem Gehäuse 2 eingespannt ist, durch das sich ein nicht dargestellter Rotor erstreckt Die Bür-stendichtung 1 umfaßt ein im wesentlichen aus einer Frontplatte 3 und einer Stützplatte 4 aufgebautes Gehäuse sowie eine Vielzahl von dicht gepackten Borsten 5, die zwischen der Frontplatte 3 und der Stützplatte 4 in 6 in einem geschlitzten C-Rohr 11 fest eingespannt sind.

Bei einem an der Bürstendichtung 1 anliegenden Differenzdruck ist die Frontplatte 3 auf der Hochdruckseite und die Stützplatte 4 auf der Niederdruckseite angeordnet. Die einseitig eingespannten Borsten 5 erstrecken sich zwischen der Frontplatte 3 und der Stützplatte 4 und stehen mit ihrem freien, von der Einspannstelle 6 entfernten Enden über Innenkanten der Frontplatte 3 und der Stützplatte 4 vor. Die Borsten 5 berühren mit ihren Enden die Rotoroberfläche und dichten so einen ringförmigen Zwischenraum zwischen der Stützplatte 4 und dem Rotor ab.

Die Frontplatte 3 und die Stützplatte 4 haben im vorliegenden Ausführungsbeispiel die gleiche Materialstärke S. An einem freien Ende der Frontplatte 3 ist eine Bördellippe 7 ausgebildet, die eine geringere Stärke s besitzt Die Stärke s beträgt etwa 2/3 der Materialstärke S. Der Materialabtrag erfolgt an der nach außen gerichteten Seitenfläche der Frontplatte 3.

Die Bördelippe 7 umgreift die Außenkante 8 der Stützplatte 4 nicht vollständig, sondern lediglich in einem Umformwinkel a von etwa 65°. Mit diesem Umformwinkel wird eine starre und feste, kraftschlüssige Verbindung zwischen der Front- und Stützplatte 3 bzw. 4 geschaffen, die gleichzeitig gewährleistet, daß auch die Borsten 5 zwischen der Front- und der Stützplatte 3 bzw. 4 fest eingespannt sind.

Der Biegeradius r ist gleich dem Außenradius R der Außenkante 8, so daß sich die Bördellippe 7 an die Kontur der Stützplatte 4 bzw. dessen Außenkante 8 anschmiegt, die an die Bördellippe 7 angrenzende äußere (Umfangs-)Fläche 9 jedoch eben ausgebildet ist.

Diese an die Bördellippe 7 angrenzende äußere (Umfangs-)Fläche 9 ist eine Paßfläche, die zur paßgenauen Anbringung der Bürstendichtung 1 zwischen dem Gehäuse 2 und dem Rotor eben sein muß und im allgemeinen senkrecht zu den beiden äußeren Seitenflächen 10 der Front- und Stützplatte 3 bzw. 4 verlaufen muß. Die Stärke s, der Radius t und die Länge I der Bördellippe 7 sind daher so zu wählen, daß nach der Kaltverfügung bzw.-verformung die vorgenannten Anforderungen an die Paßfläche 9 erfüllt sind.

## Patentansprüche

1. Bürstendichtung zum Abdichten eines Rotors gegen ein Gehäuse, mit einer Frontplatte (3) und einer Stützplatte (4), die mit Abstand zueinander angeordnet und an dem Gehäuse anzubringen sind, und zwischen denen eine Vielzahl von Borsten (5) so gehalten sind, daß sie mit ihren freien Enden über die Stützplatte (4) vorst e-hen, wobei die Frontplatte (3) oder die Stützplatte (4) ein als Bördellippe (7) ausgebildetes freies Ende aufweist und beide Platten (3,4) durch Kaltverfügen unter Bildung eines Dichtungsgehäuses miteinander verbunden sind, dadurch geken n-zeichnet, daß die die Bördellippe (7) aufweisende Platte (3,4) eine als Paßfläche ausgebildete, äußere Umfangsfläche (9) aufweist, von der aus die Stärke (S) der Platte (3,4) zur Stärke (s) der Bördellippe (7) verringert ist, und die Bördellippe (7) über die Kontur der anderen Platte (4,3) in einem Bogen von 60° bis 90° gebördelt ist, der zur festen Verbindung der beiden Platten (3,4) au sreicht.

2. Bürstendichtung nach Anspruch 1, **dadurch gekennzeichnet, daß** die Stärke (s) der Bördellippe (7) etwa 2/3 der Materialstärke (S) der Front- oder Stützplatte (3,4) beträgt.

3. Bürstendichtung nach Anspruch 1 oder 2, **dadurch gekennzeichnet, daß** der B o-gen kreisförmig ist und sein Biegeradius (r) gleich dem 1 bis 1,5-fachen der Materialstärke (S) der Front- oder Stützplatte (3,4) ist.

4. Bürstendichtung nach Anspruch 3, **dadurch gekennzeichnet, daß** der Biegeradius (r) gleich dem Außenradius (R) an der Außenkante (8) der Front- oder Stützplatte (3,4) ist.

5. Bürstendichtung nach einem oder mehreren der vorhergehenden Ansprüche, **dadurch gekennzeichnet, daß** die Paßfläche (9) senkrecht zu äußeren Seitenflächen (10) der Front- und Stützplatte (3,4) verläuft.

6. Bürstendichtung nach einem oder mehreren der vorhergehenden Ansprüche, **dadurch gekennzeichnet, daß** die Front- und Stützplatte (3,4) aus tiefgezogenem Stahlblech bestehen.

## Claims

1. Brush packing for packing a rotor against a housing, with a front plate (3) and a support plate (4) that are disposed separated from each other and that are to be attached to the housing, and between which a number of brushes (5) are held such that they extend, with their free ends, over the support plate (4), whereby the front plate (3) or the support plate (4) has a free end developed as a flange lip (7) and both plates (3, 4) are connected to each other, by cold jointing, with the formation of a sealing housing, **characterized in that** the plate (3, 4) having the flange lip (7) has an outer peripheral surface (9) developed as a seat, moving outwards from which the thickness (S) of the plate (3, 4) is reduced to the thickness (s) of the flange lip (7), and the flange lip (7) is rimmed, through the outline of the other plate (4, 3) in an arc of 60° to 90° that suffices for fixed connection of the two plates (3, 4).

2. Brush packing in accordance with claim 1, **characterized in that** the thickness (S) of the flange lip (7) is approximately 2/3 of the material thickness (S) of the front or support plate (3, 4).

3. Brush packing in accordance with claim 1 or 2, **characterized in that** the arc is circular and its bending radius (r) is 1 to 1.5 times the thickness (S) of the front or support plate (3,4).

4. Brush packing in accordance with claim 3, **characterized in that** the bending radius (r) is the outer radius (R) on the outer rim (8) of the front or support plate (3, 4).

5. Brush packing in accordance with one or several of the preceding claims, **characterized in that** the seat (9) runs vertically in relation to the outer lateral surfaces (10) of the front and support plate (3, 4).

6. Brush packing in accordance with one or several of the preceding claims, **characterized in that** the front and support plate (3, 4) are made of deep-drawn sheet steel.

## Revendications

1. Joint-brosse pour l'étanchéification d'un rotors dans un carter, avec une plaque frontale (3) et une plaque d'appui (4) écartées l'une de l'autre et fixées au carter, et plusieurs poils (5) sont maintenues entre elles, de telle sorte que leur extrémité libre dépassent de la plaque d'appui (4), moyennant quoi la plaque frontale (3) ou la plaque d'appui (4) comprend une extrémité libre ayant la forme d'une lèvre rabattue (7) et les deux plaques (3,4) sont reliées entre elles par assemblage à froid, avec la formation d'un boîtier de joint d'étanchéité, **caractérisé en ce que** la plaque (3,4) comprenant la lèvre rabattue (7) comprend une surface circonférentielle (9) servant de surface d'ajustage, à partir de laquelle l'épaisseur (S) de la plaque (3,4) est réduite à l'épaisseur (s) de la lèvre rabattue (7), et la lèvre rabattue (7) est rabattue sur le contour de l'autre plaque (3,4) avec un angle de 60° à 90°, qui est suffisant pour une liaison solide des deux plaques (3,4),

2. Joint-brosse selon la revendication 1, **caractérisé en ce que** l'épaisseur (s) de la lèvre rabattue (7) représente environ 2/3 de l'épaisseur (S) de la plaque frontale ou d'appui (3,4).

3. Joint-brosse selon la revendication 1 ou 2, **caractérisé en ce que** l'angle est arrondi et son rayon de courbure (r) est de 1 à 1,5 fois plus important que l'épaisseur (S) de la plaque frontale ou d'appui (3,4).

4. Joint-brosse selon la revendication 3, **caractérisé en ce que** le rayon de courbure (r) est égal au rayon extérieur (R) de l'arête extérieur (8) de la plaque frontale ou d'appui (3,4).

5. Joint-brosse selon l'une ou plusieurs des revendications précédentes, **caractérisé en ce que** la surface d'ajustage (9) est perpendiculaire aux faces latérales externes (10) de la plaque frontale ou d'appui (3,4).

6. Joint-brosse selon l'une ou plusieurs des revendications précédentes, **caractérisé en ce que** la plaque frontale ou d'appui (3,4) est constituée d'une tôle d'acier emboutie.
